# EUROPEAN PATENT APPLICATION

(11) **EP 4 620 848 A1**
(43) Date of publication of application: **24.09.2025**
(21) Application number: 24759996.2
(22) Date of filing: 23.01.2024
(51) Int. Cl.: B65B 37/08, A61J 3/00, B65B 1/30, B65B 39/00

(54) **MEDICINE SUPPLY DEVICE**

(30) Priority: 20.02.2023 JP 2023024545
(71) Applicant: PHC HOLDINGS CORPORATION, Tokyo 100-8403 (JP)
(72) Inventor: KATOU, Yoshirou, Toon-shi, Ehime 791-0395 (JP); MORII, Hideyuki, Toon-shi, Ehime 791-0395 (JP); TANAKA, Akiji, Toon-shi, Ehime 791-0395 (JP)
(74) Representative: Grünecker Patent- und Rechtsanwälte PartG mbB
(86) International application number: PCT/JP2024/001889
(87) International publication number: WO 2024/176689

(57) **Abstract**

A drug supply device, includes a conveyor that guides travel of a drug, a drug accelerator that oscillates by a motor, blocks the drug on the conveyor in a first attitude, and pivots toward a second attitude to accelerate and deliver the drug, and a stopper portion that makes contact with the drug accelerator in the first attitude of the drug accelerator to position the drug accelerator, in which the drug accelerator receives a biasing force in a direction toward the stopper portion together with a driving force of the motor during a final phase of a stroke when the drug accelerator pivots from the second attitude to the first attitude.

## Description

### Technical Field

The present invention relates to a drug supply device.

### Background Art

Patent Literature (hereinafter referred to as "PTL") 1 discloses a drug supply device that discharges drugs specified by a prescription from a plurality of tablet cases containing drugs, collects the discharged drugs in a hopper located below the tablet cases, and packages them with wrapping paper.

### Citation List

### Patent Literature

PTL 1
Japanese Examined Utility Model (Registration) Application Publication No. S57-2241

### Summary of Invention

### Technical Problem

Meanwhile, from the perspective of improving the work efficiency of drug packaging operations, a drug supply device that can shorten the time required for drug packaging is desired.

The present invention has been made in view of such circumstances and aims to provide a drug supply device that can shorten the time required for drug packaging operations.

### Solution to Problem

One aspect of a drug supply device according to the present invention includes:
a conveyor that guides travel of a drug;
a drug accelerator that oscillates by a motor, blocks the drug on the conveyor in a first attitude, and pivots toward a second attitude to accelerate and deliver the drug; and
a stopper portion that makes contact with the drug accelerator in the first attitude of the drug accelerator to position the drug accelerator, in which
the drug accelerator receives a biasing force in a direction toward the stopper portion together with a driving force of the motor during a final phase of a stroke when the drug accelerator pivots from the second attitude to the first attitude.

### Advantageous Effects of Invention

According to the present invention, a drug supply device that can shorten the time required for drug packaging operations can be provided.

### Brief Description of Drawings

FIG. 1 is a perspective view of a drug supply device according to an embodiment of the present invention;
FIG. 2 is a longitudinal sectional view of the drug supply device;
FIG. 3 is a perspective view schematically showing a drug conveying unit;
FIG. 4 is a perspective view of a first conveying unit constituting the drug conveying unit;
FIG. 5 is a sectional view of the first conveying unit;
FIG. 6 is a perspective view of a drug acceleration device constituting the first conveying unit;
FIG. 7 is a plan view showing part of the configuration of a driver;
FIG. 8 is a side view showing part of the configuration of the driver;
FIG. 9 is a plan view showing part of the configuration of the driver;
FIG. 10A is a sectional view for explaining the operation of the drug acceleration device;
FIG. 10B is a sectional view for explaining the operation of the drug acceleration device;
FIG. 10C is a sectional view for explaining the operation of the drug acceleration device; and
FIG. 10D is a sectional view for explaining the operation of the drug acceleration device.

### Description of Embodiments

Hereinafter, embodiments of the drug supply device according to the present invention will be described with reference to the drawings. The same reference numerals are assigned to the same components. The matters described below with the accompanying drawings are for explaining exemplary embodiments and are not intended to show the only embodiment.

### [Embodiments]

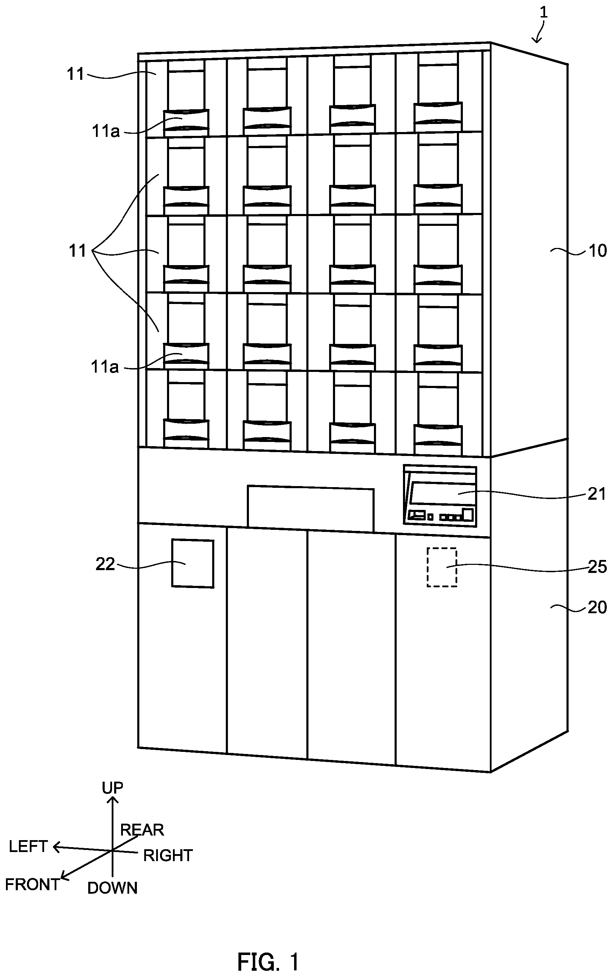

Drug supply device 1 according to an embodiment of the present invention will be described with reference to FIGS. 1 to 10D.

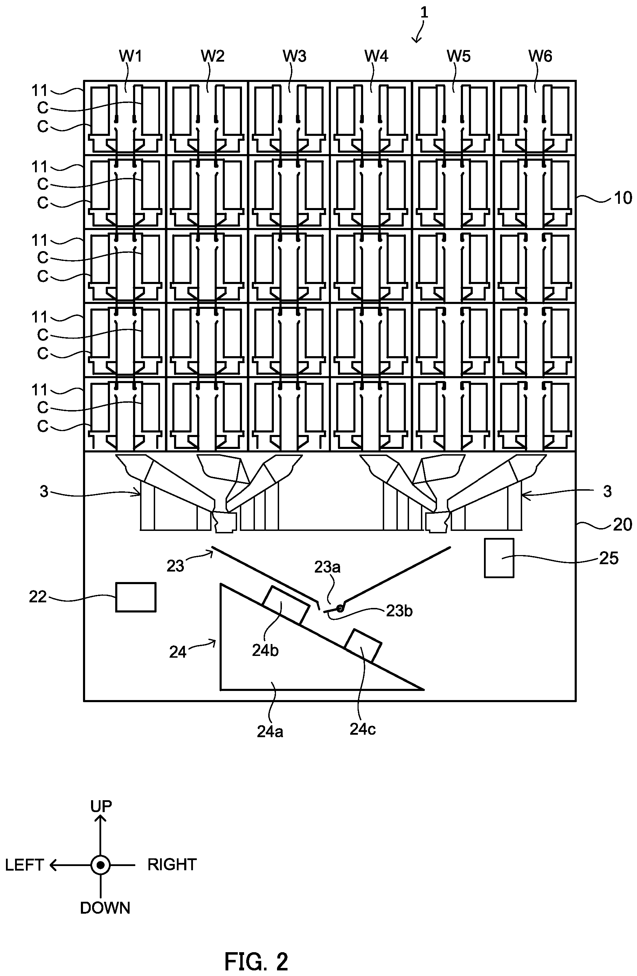

FIG. 1 is a perspective view of drug supply device 1 according to an embodiment of the present invention. FIG. 2 is a longitudinal sectional view of drug supply device 1. In the following description, as shown in the orthogonal coordinate system in FIGS. 1 and 2, the side where handle 11a of shelf 11 is located is the front of drug supply device 1.

The front-rear direction of drug supply device 1 is the direction in which tablet cases C stored in shelf 11 are arranged. Also, the left-right direction when drug supply device 1 is seen from the front is the left-right direction of drug supply device 1. Furthermore, the up-down direction when drug supply device 1 is seen from the front is the up-down direction of drug supply device 1.

Drug supply device 1 includes upper section 10 and lower section 20.

Upper section 10 constitutes the upper part of drug supply device 1. Upper section 10 includes a plurality of shelves 11 and a plurality of tablet cases C.

Shelves 11 include handles 11a. Shelves 11 store a plurality of tablet cases C in upper section 10. An operator moves shelf 11 in the front-rear direction by operating handle 11a.

Drug supply device 1 includes, for example, 30 shelves 11. In the present embodiment, shelves 11 are arranged in 5 tiers in the up-down direction and 6 columns horizontally. The number and arrangement of shelves 11 are not limited to the present embodiment.

Each tablet case C is stored in corresponding shelf 11. Tablet case C stores drugs. One tablet case C contains drugs of the same type. Each tablet case C discharges drugs one tablet at a time.

Drugs discharged from tablet case C fall through passages W1 to W6 and are supplied to lower section 20. Passages W1 to W6 are provided to penetrate each of the plurality of shelves 11 in the up-down direction. The plurality of shelves 11 are arranged in 6 columns horizontally as described above.

In other words, drug supply device 1 includes six of first to sixth passages W1 to W6. First to sixth passages W1 to W6 extend in the up-down direction along the columns of tablet cases C.

Lower section 20 is a box-shaped member and includes operation section 21, dispensing section 22, an input section (not shown), drug conveying unit 3, hopper 23, packaging unit 24, and controller 25.

Operation section 21 is a section operated by the operator. Operation section 21 includes, for example, a display and operation buttons. The operator inputs various information to drug supply device 1 by operating operation section 21.

Dispensing section 22 is the part for the operator to retrieve the packaged drugs. Dispensing section 22 includes an opening at the front. The operator takes out drugs from the opening of dispensing section 22.

The input section is an input device where various information is input from external devices. The input section obtains prescription information issued by medical institutions from communication-connected terminals (e.g., personal computers or smartphones).

Drug conveying unit 3 is located at an upper part of lower section 20. Drug conveying unit 3 supplies drugs from upper section 10 (specifically, first to sixth passages W1 to W6) to hopper 23.

Drug supply device 1 includes two sets of drug conveying units 3. The two sets of drug conveying units 3 are arranged side by side in the left-right direction. The two sets of drug conveying units 3 have almost the same configuration. The two sets of drug conveying units 3 are arranged symmetrically to each other.

Left drug conveying unit 3 of two sets of drug conveying unit 3 corresponds to first to third passages W1 to W3. Left drug conveying unit 3 receives drugs supplied from first to third passages W1 to W3 and supplies them to hopper 23.

Right drug conveying unit 3 of two sets of drug conveying units 3 corresponds to fourth to sixth passages W4 to W6. Right drug conveying unit 3 receives drugs supplied from fourth to sixth passages W4 to W6 and supplies them to hopper 23.

The number and arrangement of drug conveying units are not limited to the number and arrangement of drug conveying units 3 in the present embodiment.

Hopper 23 receives drugs supplied from the two sets of drug conveying units 3. Then, hopper 23 discharges the received drugs from discharge port 23a and supplies them to packaging unit 24. Discharge port 23a is disposed at the central and lower end of hopper 23. Discharge port 23a is opened and closed at a predetermined timing by shutter 23b. The operation of shutter 23b is controlled by controller 25.

Packaging unit 24 packages drugs supplied from hopper 23. Packaging unit 24 includes conveying device 24a, printing device 24b, and sealing device 24c.

Conveying device 24a delivers out strip-shaped wrapping paper, which is folded in half and wound around a roller (not shown), and conveys the unrolled wrapping paper toward sealing device 24c. Drugs supplied from hopper 23 are placed on the wrapping paper and conveyed together with the wrapping paper towards sealing device 24c.

Printing device 24b prints, for example, the patient's name, the name of the drug supplied to the wrapping paper, and the date and time of administration on the surface of the wrapping paper unwound from the roller.

Sealing device 24c seals the wrapping paper wrapping the drug. The wrapping paper wrapping the drug is cut at a predetermined timing, for example, and conveyed to dispensing section 22 by conveying device 24a.

Controller 25 controls each element constituting drug supply device 1. The processing executed by controller 25 will be explained as necessary.

Furthermore, drug supply device 1 according to the present embodiment, which has the configuration described above, is configured to quickly supply, to hopper 23, drugs supplied from upper section 10 to drug conveying unit 3.

Specifically, drug conveying unit 3 is configured to accelerate and convey drugs supplied from upper section 10. The specific configuration of drug conveying unit 3 will be described below.

Since left drug conveying unit 3 and right drug conveying unit 3 shown in FIG. 2 have almost the same configuration, left drug conveying unit 3 will be described below. The configuration of right drug conveying unit 3 can be appropriately interpreted from the description of left drug conveying unit 3 below.

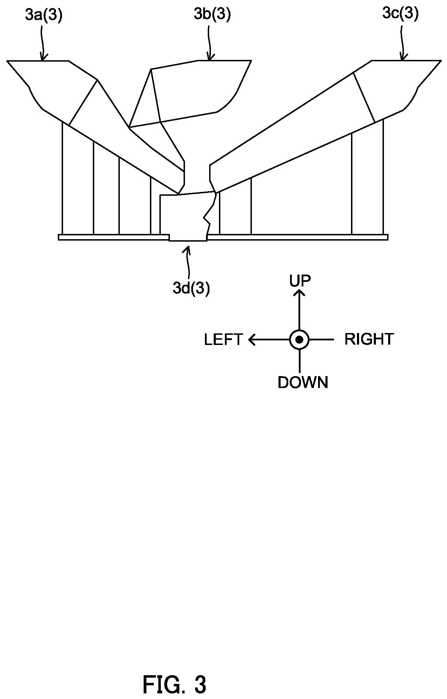

As shown in FIG. 3, drug conveying unit 3 includes first conveying unit 3a, second conveying unit 3b, third conveying unit 3c, and shutter section 3d.

First conveying unit 3a, second conveying unit 3b, and third conveying unit 3c each supply the drug provided from upper section 10 to shutter section 3d.

Such first conveying unit 3a, second conveying unit 3b, and third conveying unit 3c have almost the same configuration as each other. First conveying unit 3a, second conveying unit 3b, and third conveying unit 3c correspond to the rows of shelves 11 in upper section 10. In other words, the number of conveying units constituting drug conveying unit 3 is appropriately determined according to the configuration of the upper section.

Below, the configuration of first conveying unit 3a will be described. The configuration of second conveying unit 3b and third conveying unit 3c may be appropriately interpreted based on the following description of the configuration of first conveying unit 3a.

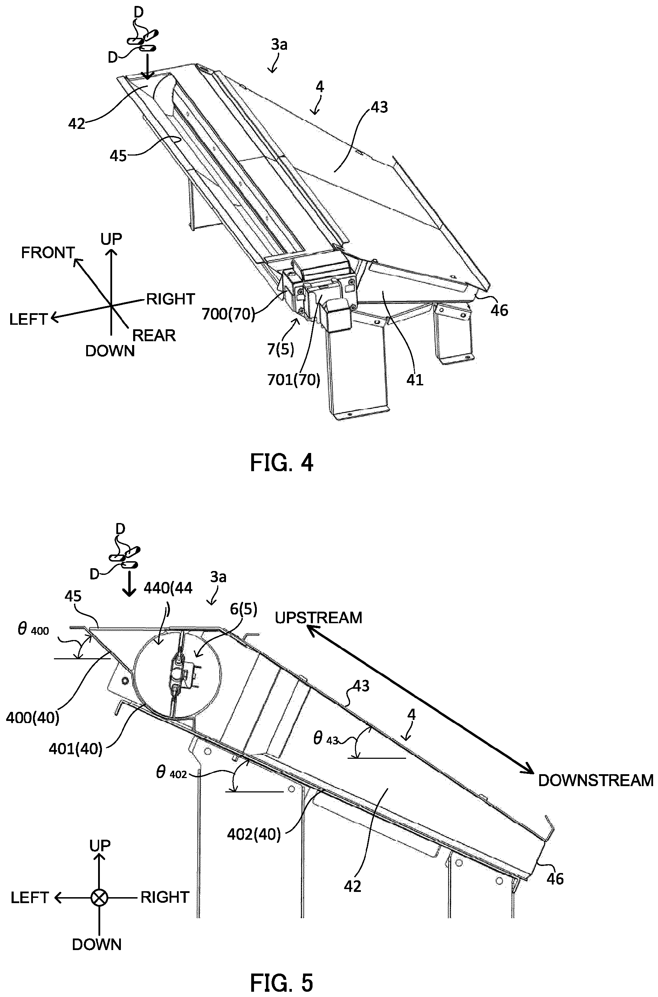

As shown in FIG. 4, first conveying unit 3a includes main body 4 and drug acceleration device 5. Note that the front-rear direction in the orthogonal coordinate system shown in FIG. 4 matches the actual configuration. However, the front-rear direction and the left-right direction may be reversed.

Main body 4 corresponds to an example of a conveyor and is a box-shaped member. Specifically, main body 4 includes bottom plate portion 40, first side plate portion 41, second side plate portion 42, and top plate portion 43.

Main body 4 also includes conveyance space 44 (see FIG. 5) surrounded by bottom plate portion 40, first side plate portion 41, second side plate portion 42, and top plate portion 43. Conveyance space 44 is a space where drug D is conveyed.

Conveyance space 44 includes first region 440 where drug acceleration device 5, described later, is disposed. First region 440 is an upstream region in conveyance space 44.

Note that the upstream side and downstream side refer to the upstream and downstream sides in the traveling direction of drug D. For example, the left side in FIG. 5 is the upstream side. On the other hand, the right side in FIG. 5 is the downstream side.

Main body 4 (in other words, conveyance space 44) opens at the upstream end and the downstream end.

Main body 4 includes supply port 45 at the upstream end. Main body 4 also includes discharge port 46 at the downstream end. Main body 4 (in other words, conveyance space 44) is inclined obliquely downward from supply port 45 to discharge port 46.

Supply port 45 opens upward. In other words, supply port 45 faces the downstream end (in other words, the lower end) of passage W1 of upper section 10 corresponding to first conveying unit 3a in the up-down direction. Supply port 45 receives drug D discharged from the downstream end of passage W1.

Discharge port 46 opens obliquely downward. In other words, discharge port 46 opens toward shutter section 3d of drug conveying unit 3. Drug D supplied from supply port 45 travels within conveyance space 44 toward discharge port 46. Then, drug D is discharged from discharge port 46 and supplied to shutter section 3d.

Bottom plate portion 40 constitutes the lower wall of main body 4. Bottom plate portion 40 covers conveyance space 44 from below. As shown in FIG. 5, bottom plate portion 40 includes upstream plate portion 400, curved portion 401, and downstream plate portion 402. Bottom plate portion 40 can also be regarded as an example of a conveyor.

Upstream plate portion 400 constitutes an upstream portion of bottom plate portion 40. Upstream plate portion 400 is inclined obliquely downward from the upstream side to the downstream side overall.

Upstream plate portion 400 corresponds to an example of an upstream conveyor and has a flat upper surface. In the present embodiment, upstream plate portion 400 is a generally flat plate-like member. The inclination angle of upstream plate portion 400 with respect to the horizontal direction is θ₄₀₀.

Drug D supplied from supply port 45 falls onto the upper surface of upstream plate portion 400. Then, the drug travels by free fall on the upper surface of upstream plate portion 400 from the upstream side to the downstream side.

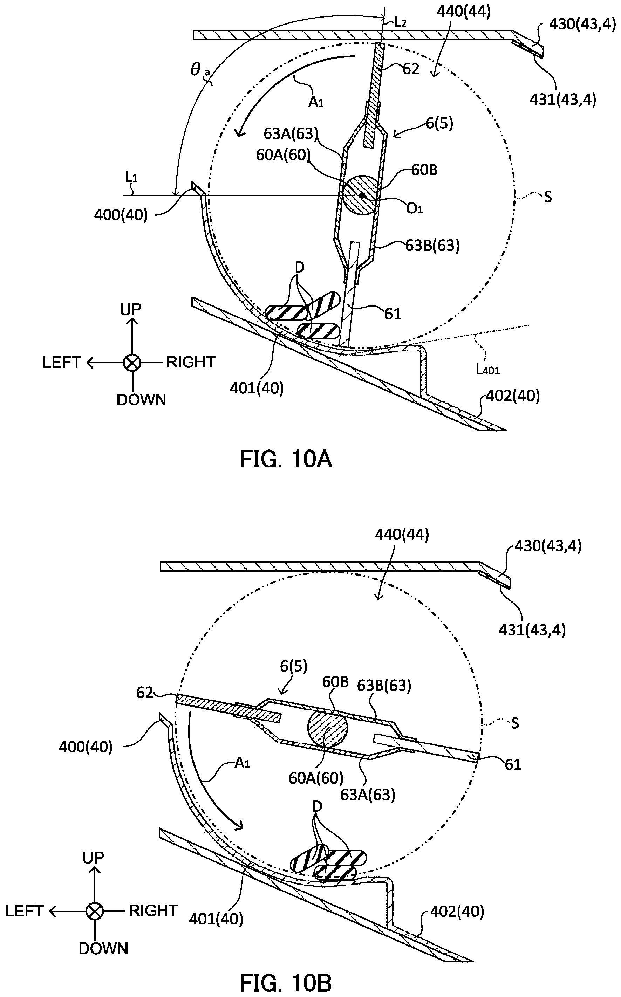

Curved portion 401 corresponds to an example of a retainer. As shown in FIG. 5, curved portion 401 has a curved upper surface. Curved portion 401 temporarily retains drug D (see FIG. 10B) in a state where blocking by drug acceleration device 5 described later is released.

The upstream end of curved portion 401 is connected to the downstream end of upstream plate portion 400. The downstream end of curved portion 401 is connected to the upstream end of downstream plate portion 402.

In the present embodiment, curved portion 401 is a generally curved plate-like member. Curved portion 401 is disposed at a position corresponding to first region 440 in conveyance space 44.

Curved portion 401 is curved so that the lower side is convex. Curved portion 401 is curved along virtual circle S (see FIG. 10A) with a predetermined curvature.

Note that virtual circle S is a circle centered on oscillation center O₁ of rotation unit 6 of drug acceleration device 5. Virtual circle S is also a circle indicating the trajectory through which the tip of blocker 61 and the tip of deliverer 62 pass when rotation unit 6 of drug acceleration device 5 oscillates.

The upstream end of curved portion 401 is located at the highest position in curved portion 401. Also, the downstream end of curved portion 401 is located above a middle portion (in other words, an intermediate portion) of curved portion 401.

In other words, curved portion 401 descends from the upstream end toward the intermediate portion. Then, curved portion 401 slightly rises from the intermediate portion toward the downstream end. Tangent L₄₀₁ (see FIG. 10A) at the downstream end of curved portion 401 is inclined obliquely upward from the upstream side to the downstream side.

Drug D that has traveled by free fall on the upper surface of upstream plate portion 400 from the upstream side to the downstream side is temporarily blocked at curved portion 401 (see FIG. 10A) by drug acceleration device 5 (specifically, rotation unit 6) described later.

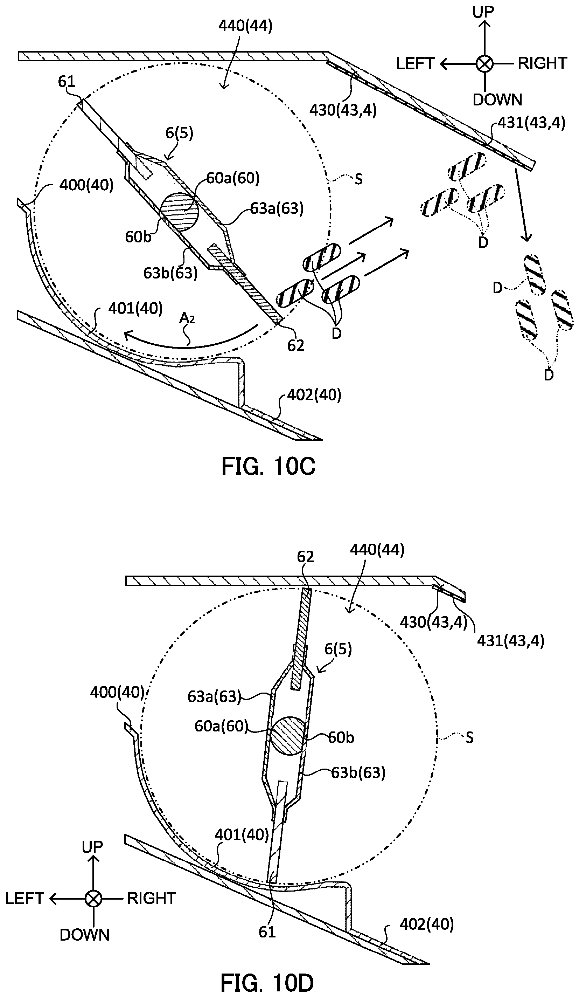

When the blocking by drug acceleration device 5 is released, drug D is temporarily retained in curved portion 401 (see FIG. 10B). Then, drug D having been retained in curved portion 401 is accelerated by drug acceleration device 5 and delivered to the downstream side (see FIG. 10D).

### (Downstream plate portion)

As shown in FIG. 5, downstream plate portion 402 constitutes the downstream portion of bottom plate portion 40 on the downstream side of curved portion 401. Downstream plate portion 402 is inclined obliquely downward from the upstream side to the downstream side overall.

Downstream plate portion 402 corresponds to an example of a downstream conveyor and has a flat upper surface. In the present embodiment, downstream plate portion 402 is a generally flat plate-like member. The inclination angle of downstream plate portion 402 with respect to the horizontal direction is θ₄₀₂. Inclination angle θ₄₀₂ of downstream plate portion 402 is smaller than inclination angle θ₄₀₀ of upstream plate portion 400 (θ₄₀₂ < θ₄₀₀).

Drug D delivered by drug acceleration device 5 from curved portion 401 falls onto the upper surface of downstream plate portion 402. Then, drug D travels on the upper surface of downstream plate portion 402 from the upstream side to the downstream side.

In the present embodiment, bottom plate portion 40 is made of stainless steel. With such a configuration, the drug can smoothly slide on the upper surface of bottom plate portion 40 and move to the downstream side. Thus, it is preferable that bottom plate portion 40 has a smooth upper surface. Note that bottom plate portion 40 may be made of a metal other than stainless steel or a synthetic resin with a smooth upper surface.

First side plate portion 41 constitutes the sidewall portion on one side (in the present embodiment, the rear side) in the front-rear direction of main body 4. First side plate portion 41 covers conveyance space 44 from the rear.

First side plate portion 41 supports the rear end of rotation unit 6 (specifically, rotation shaft 60) of drug acceleration device 5 described later in a rotatable state. Also, first side plate portion 41 supports driver 7 of drug acceleration device 5 described later. Note that first side plate portion 41 may be constituted by a single plate-like member or by a plurality of plate-like members.

Second side plate portion 42 constitutes the sidewall portion on the other side (in the present embodiment, the front side) in the front-rear direction of main body 4. Second side plate portion 42 covers conveyance space 44 from the front.

Second side plate portion 42 supports the front end of rotation unit 6 (specifically, rotation shaft 60) of drug acceleration device 5 described later in a rotatable state. Note that second side plate portion 42 may be constituted by a single plate-like member or by a plurality of plate-like members.

Top plate portion 43 corresponds to an example of a cover member and constitutes the upper wall portion of main body 4. Top plate portion 43 covers conveyance space 44 from above. Top plate portion 43 is inclined obliquely downward from the upstream side to the downstream side overall.

The inclination angle of top plate portion 43 with respect to the horizontal direction is θ₄₃ (see FIG. 5). Inclination angle θ₄₃ of top plate portion 43 is greater than inclination angle θ₄₀₂ of downstream plate portion 402 in bottom plate portion 40 (inclination angle θ₄₃ > inclination angle θ₄₀₂). Therefore, the height of conveyance space 44 is lower toward the downstream side.

Top plate portion 43 bounces downward drug D delivered by drug acceleration device 5 from curved portion 401 (see FIG. 10C). Top plate portion 43 includes cushioning member 431 (see FIG. 10C) at least in the part where drug D collides.

Cushioning member 431 is a rubber sheet. In the present embodiment, as shown in FIG. 10C, top plate portion 43 is constituted by, for example, top-plate-portion main body 430 made of metal or synthetic resin and cushioning member 431 disposed on the lower surface of top-plate-portion main body 430. Such cushioning member 431 contributes to suppressing damage to drug D being conveyed. As a result, the work efficiency of the drug supply operation is improved. Note that cushioning member 431 does not need to be disposed over the entire lower surface of cushioning member 431. For example, in top plate portion 43, cushioning member 431 does not need to be disposed in areas other than where drug D collides.

Drug acceleration device 5 is disposed in first region 440 of conveyance space 44, as shown in FIG. 5. Drug acceleration device 5 is a device for accelerating drug D in conveyance space 44 and delivering it downstream. Drug acceleration device 5 can also be considered as an example of a drug accelerator.

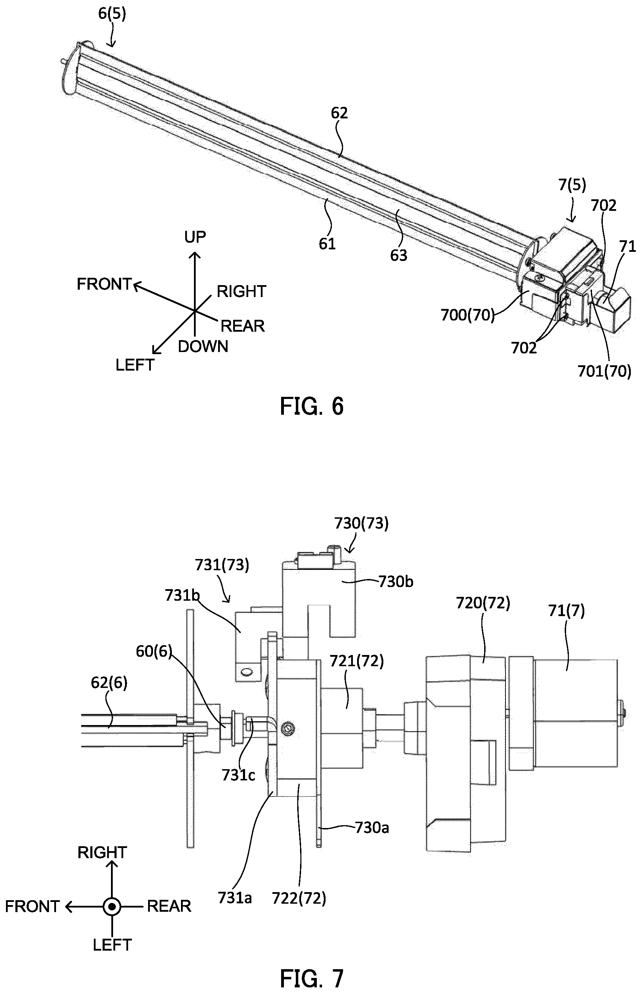

Below, the configuration of drug acceleration device 5 will be described with reference to FIGS. 5 to 10D. As shown in FIG. 6, drug acceleration device 5 includes rotation unit 6 and driver 7. FIG. 6 is a perspective view showing the overall appearance of drug acceleration device 5.

Rotation unit 6 rotates based on a driving force of driver 7. Rotation unit 6 temporarily blocks drug D on bottom plate portion 40 and accelerates and delivers blocked drug D. Rotation unit 6 can also be considered as an example of a drug accelerator.

Rotation unit 6 oscillates between the first attitude shown in FIG. 10A and the second attitude shown in FIG. 10C, which the attitude of the rotation unit rotated by a predetermined angle in a predetermined direction (opposite to the clockwise direction in FIG. 10A) from the first attitude, based on the driving force of driver 7.

In the first attitude, rotation unit 6 temporarily blocks drug D on bottom plate portion 40. Then, by oscillation in a first rotational direction from the first attitude to the second attitude, rotation unit 6 accelerates and delivers drug D on bottom plate portion 40.

The first rotational direction is also referred to as a delivery rotational direction. The first rotational direction is the direction in which rotation unit 6 moves from the first attitude to the second attitude. On the other hand, the direction opposite to the first rotational direction is referred to as a second rotational direction. The second rotational direction is the direction in which rotation unit 6 moves from the second attitude to the first attitude. The second rotational direction is also referred to as a return rotational direction.

In the following description, unless otherwise specified, the term "first rotational direction" refers to the first rotational direction of rotation unit 6 and the members rotating with rotation unit 6. Also, unless otherwise specified, the term "second rotational direction" refers to the second rotational direction of rotation unit 6 and the members rotating with rotation unit 6.

Specifically, as shown in FIGS. 6 to 10D, rotation unit 6 includes rotation shaft 60, blocker 61, and deliverer 62. Note that FIGS. 6 to 9 correspond to the state where rotation unit 6 is in the first attitude.

Rotation shaft 60 corresponds to an example of a shaft member and is shaft-shaped. Rotation shaft 60 is disposed in a state parallel to the front-rear direction. Rotation shaft 60 is the rotational center (in other words, the oscillation center) of rotation unit 6.

The first end (specifically, the rear end) in the axial direction of rotation shaft 60 is rotatably supported by first side plate portion 41 in main body 4 of first conveying unit 3a.

The second end (specifically, the front end) of rotation shaft 60 in the axial direction is rotatably supported by second side plate portion 42 in main body 4 of first conveying unit 3a.

Rotation shaft 60 includes intermediate shaft portion 60a between the first end and the second end in the axial direction. Intermediate shaft portion 60a is a so-called D-cut shaft, with a D-shaped cross-section. Intermediate shaft portion 60a includes flat D-cut surface 60b at one location of the outer peripheral surface in the circumferential direction (see FIGS. 10A to 10D).

Note that FIGS. 10A to 10D are cross-sectional views of drug acceleration device 5 at a position corresponding to the intermediate portion (i.e., intermediate shaft portion 60a) in the axial direction of rotation shaft 60.

Also, rotation shaft 60 (specifically, intermediate shaft portion 60a) has a shape along a slightly curved line. In other words, the central axis of rotation shaft 60 (specifically, intermediate shaft portion 60a) is in a slightly curved line shape.

Rotation shaft 60 (specifically, intermediate shaft portion 60a) is curved such that the side with D-cut surface 60b is convex. Also, rotation shaft 60 is curved such that a middle portion in the axial direction is the apex.

In the first attitude of rotation unit 6, rotation shaft 60 is disposed such that D-cut surface 60b faces forward in the traveling direction of drug D (the right side in FIG. 10A). In other words, in the first attitude of rotation unit 6, rotation shaft 60 is disposed such that the rotation shaft is convex in the forward direction (the right side in FIG. 10A) in the traveling direction of drug D.

Also, the center of gravity of rotation shaft 60 in the cross-section is biased in a predetermined direction as it approaches the middle portion in the axial direction of rotation shaft 60 in the first attitude of rotation unit 6. Specifically, the center of gravity of rotation shaft 60 in the cross-section is biased forward in the traveling direction of drug D as it approaches the middle portion in the axial direction of rotation shaft 60 in the first attitude of rotation unit 6.

Rotation shaft 60 with the above configuration generates a moment in a predetermined direction in the first attitude of rotation unit 6. The predetermined direction is the clockwise direction in FIG. 10A (i.e., the second rotational direction).

Also, rotation shaft 60 generates the above-mentioned moment not only in the first attitude of rotation unit 6 but also in a predetermined range including the first attitude of rotation unit 6. The predetermined range corresponds to a latter part of a stroke performed when rotation unit 6 rotates from the second attitude to the first attitude.

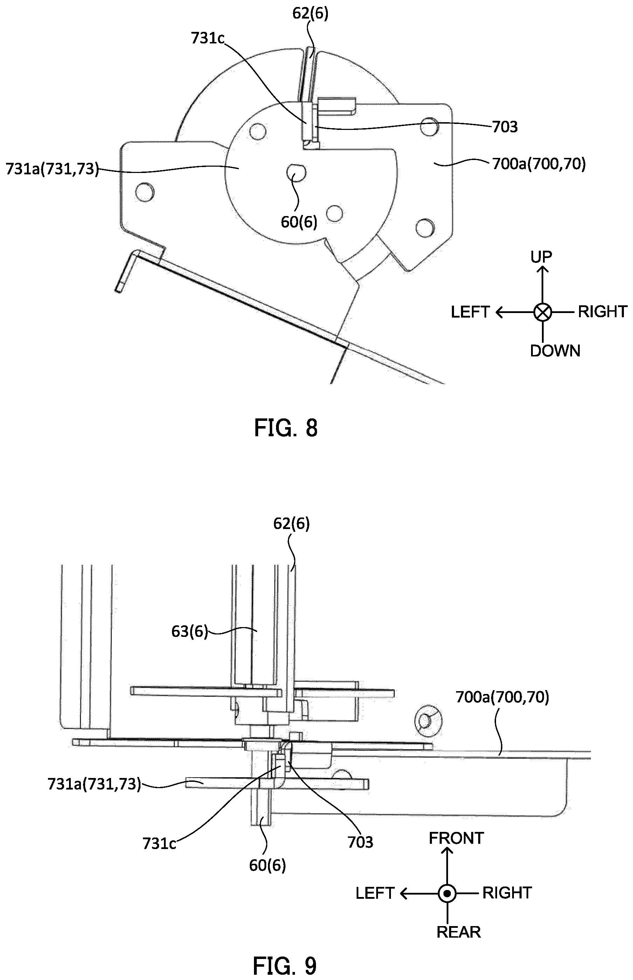

In other words, rotation shaft 60 generates a moment in a predetermined direction (in other words, the second rotational direction) when stopped portion 731c (see FIGS. 8 and 9) and stopper portion 703 make contact with each other. Note that the state where stopped portion 731c and stopper portion 703 are in contact corresponds to the first attitude of rotation unit 6.

Also, rotation shaft 60 generates the above-mentioned moment not only in the state where stopped portion 731c and stopper portion 703 are in contact but also in a predetermined range including the state where stopped portion 731c and stopper portion 703 are in contact. The predetermined range corresponds to the latter part of the stroke when rotation unit 6 rotates from the second attitude to the first attitude.

Note that the predetermined range in which rotation shaft 60 generates the above-mentioned moment is a range determined according to the shape and arrangement of rotation shaft 60. The shape of rotation shaft 60 used to determine the predetermined range is, for example, the position of the center of gravity or the curvature.

The arrangement of rotation shaft 60 used to determine the predetermined range is, for example, the position of the center of gravity of rotation shaft 60 in the first attitude of rotation unit 6. Alternatively, the arrangement of rotation shaft 60 used to determine the predetermined range is the curbing direction of rotation shaft 60 in the first attitude of rotation unit 6.

Specifically, the predetermined range may be, for example, the range between the state where rotation unit 6 (specifically, deliverer 62) overlaps with line L₁ shown in FIG. 10A and the state where rotation unit 6 (specifically, deliverer 62) overlaps with line L₂. Note that the state where rotation unit 6 (specifically, deliverer 62) overlaps with line L₁ shown in FIG. 10A may be considered as the third attitude of rotation unit 6.

Line L₁ is a line parallel to the horizontal direction. Line L₁ is the position where rotation unit 6 has rotated by a predetermined angle θₐ (see FIG. 10A) in the first rotational direction, which is the direction indicated by arrow A₁ in FIG. 10A, from the first attitude. In the present embodiment, the range in which rotation shaft 60 generates the above-mentioned moment is set to 90 degrees or more. In the third attitude of rotation unit 6, rotation shaft 60 is convex upward in the up-down direction.

Line L₂ is a line connecting oscillation center O₁ of rotation unit 6 and the tip of deliverer 62 in the first attitude of rotation unit 6. Line L₂ coincides with the direction in which deliverer 62 is disposed in the radial direction centered on oscillation center O₁ of rotation unit 6.

Note that the configuration for generating the moment in the second rotational direction on rotation shaft 60 is not limited to the configuration of the present embodiment. For example, by changing the shape of rotation shaft 60 to appropriately set the position of the center of gravity of rotation shaft 60, the above-mentioned moment may be generated on rotation shaft 60. Alternatively, by fixing a weight or the like to rotation shaft 60 to appropriately set the position of the center of gravity of rotation shaft 60, the above-mentioned moment may be generated on rotation shaft 60.

In the first attitude of rotation unit 6, blocker 61 temporarily blocks drug D on bottom plate portion 40, as shown in FIG. 10A. Specifically, in the first attitude of rotation unit 6, blocker 61 temporarily blocks drug D at curved portion 401.

Blocker 61 is a plate-like member extending in the front-rear direction. At least at the tip of blocker 61 is made of an elastic material. Specifically, in the present embodiment, the tip of blocker 61 is made of a nylon brush. Blocker 61 is fixed to rotation shaft 60 via fixing member 63. Fixing member 63 will be described later.

In the first attitude of rotation unit 6, deliverer 62 is disposed at a position offset by 180 degrees from blocker 61, as shown in FIG. 10A. In other words, the angle formed between deliverer 62 and blocker 61 is 180 degrees. That is, deliverer 62 is disposed on the opposite side of blocker 61 in the rotational direction of rotation unit 6.

When rotation unit 6 rotates from the first attitude in the first rotational direction (opposite to the clockwise direction in FIG. 10A), deliverer 62 collides with drug D retained in curved portion 401 of main body 4 and accelerates and delivers drug D.

Deliverer 62 is a plate-like member extending in the front-rear direction. At least the tip of deliverer 62 is made of an elastic member. Specifically, in the present embodiment, the tip of deliverer 62 is made of a nylon brush. Deliverer 62 is fixed to rotation shaft 60 via fixing member 63.

Furthermore, the position of the deliverer is not limited to the position of deliverer 62 in the present embodiment. The angle formed between deliverer 62 and blocker 61 in the present embodiment is 180 degrees. However, the angle between the deliverer and the blocker may be less than 180 degrees. For example, the angle between the deliverer and the blocker may be 90 degrees.

Here, fixing member 63 will be described. Fixing member 63 is a component for fixing blocker 61 and deliverer 62 to rotation shaft 60.

Specifically, fixing member 63 includes first plate 63a and second plate 63b.

First plate 63a is a plate-like member extending in the front-rear direction. Second plate 63b is a plate-like member extending in the front-rear direction. That is, the longitudinal directions of first plate 63a and second plate 63b coincide with the front-rear direction.

First plate 63a and second plate 63b are fixed to face each other. Rotation shaft 60 is disposed between a middle portion in the transverse direction of first plate 63a and the middle portion in the transverse direction of second plate 63b.

First plate 63a and second plate 63b sandwich rotation shaft 60. Since the side surface of second plate 63b and D-cut surface 60b of rotation shaft 60 are in contact with each other, the rotation of rotation shaft 60 is transmitted to fixing member 63. In other words, fixing member 63 rotates together with rotation shaft 60.

Also, blocker 61 is sandwiched between the first end of first plate 63a in the transverse direction and the first end of second plate 63b in the transverse direction. Blocker 61 is fixed to first plate 63a and second plate 63b. Therefore, blocker 61 rotates together with fixing member 63. In other words, blocker 61 rotates together with rotation shaft 60.

Also, deliverer 62 is sandwiched between the second end of first plate 63a in the transverse direction and the second end of second plate 63b in the transverse direction. Deliverer 62 is fixed to first plate 63a and second plate 63b. Therefore, deliverer 62 rotates together with fixing member 63. In other words, deliverer 62 rotates together with rotation shaft 60.

Rotation unit 6 having the above configuration oscillates between the first attitude shown in FIG. 10A and the second attitude shown in FIG. 10C based on the driving force of driver 7. At this time, the oscillation center of rotation unit 6 is rotation shaft 60.

Also, when rotation unit 6 oscillates, the tip of blocker 61 and the tip of deliverer 62 move on virtual circle S shown by the double-dot dashed line in FIGS. 10A to 10C.

Furthermore, in the first attitude of rotation unit 6 shown in FIG. 10A, rotation unit 6 closes off conveyance space 44 such that drug D cannot pass through by blocker 61, deliverer 62, and fixing member 63.

In other words, in the state shown in FIG. 10A, drug D cannot move downstream of rotation unit 6. Such a configuration can suppress unintended travel of drug D.

Also, since conveyance space 44 is surrounded by bottom plate portion 40, first side plate portion 41, second side plate portion 42, and top plate portion 43, drug D does not scatter outside.

Next, driver 7 will be described. Driver 7 is a device for rotating rotation unit 6. As shown in FIG. 4, driver 7 is supported by main body 4 of first conveying unit 3a (specifically, first side plate portion 41).

As shown in FIGS. 6 to 9, driver 7 includes housing 70, electric motor 71, transmission section 72, and position detection device 73.

### (Housing 70)

Housing 70 houses elements constituting driver 7. Housing 70 is also a member for fixing driver 7 to main body 4 (specifically, first side plate portion 41) of first conveying unit 3a. Housing 70 is a non-rotating member.

As shown in FIG. 6, housing 70 includes first housing 700 and second housing 701.

First housing 700 is a box-shaped member. First housing 700 is fixed to main body 4 of first conveying unit 3a (specifically, first side plate portion 41) by fastening components such as bolts.

First housing 700 has a housing space. First housing 700 houses part of the configuration of transmission section 72 (specifically, torque limiter 721) and position detection device 73 in the housing space.

First housing 700 includes housing-side fixing member 700a (see FIGS. 8 and 9) that forms a portion fixed to main body 4 (specifically, first side plate portion 41). Housing-side fixing member 700a is plate-shaped and constitutes part of first housing 700.

Also, housing-side fixing member 700a includes stopper portion 703. Stopper portion 703, in the first attitude of rotation unit 6 described later, contacts drug acceleration device 5 (specifically, stopped portion 731c of drug acceleration device 5) to restrict the oscillation in the second rotational direction of drug acceleration device 5 (specifically, rotation unit 6).

**In** other words, stopper portion 703 positions drug acceleration device 5 in the first attitude of rotation unit 6 described later.

The position of the stopper portion is not limited to the position of stopper portion 703 in the present embodiment. The stopper portion may be disposed at an appropriate position in housing 70. Also, the stopper portion may be disposed on a member other than housing 70. For example, the stopper portion may be disposed on main body 4.

Second housing 701 is a box-shaped member. Second housing 701 includes a housing space. Second housing 701 houses part of the configuration of transmission section 72 (specifically, speed reducer 720) in the housing space. Also, second housing 701 supports electric motor 71.

Second housing 701 is supported by first housing 700. Specifically, second housing 701 is positioned further from main body 4 than first housing 700 (in the present embodiment, in rear of the first housing).

As shown in FIG. 6, second housing 701 is supported on the surface of first housing 700 that is on the further side from main body 4 (in the present embodiment, on the rear side surface). Second housing 701 is supported by first housing 700 by a plurality of support members 702.

Support members 702 have a function of absorbing shocks. Specifically, support members 702 include cushioning members such as rubber spacers. Support members 702 suppress the transmission of vibration and shock from first housing 700 to second housing 701.

Such a configuration can suppress the transmission of vibration and shock to electric motor 71 supported by second housing 701. As a result, damage and failure of electric motor 71 can be suppressed.

Electric motor 71 is supported by second housing 701. Electric motor 71 operates under the control of controller 25. Electric motor 71 may be, for example, a so-called brushless motor. Electric motor 71 may be various types of electric motors.

Electric motor 71 is disposed with its output shaft (not shown) parallel to the front-rear direction. The output shaft of electric motor 71 is connected to transmission section 72 described later. The output of electric motor 71 (i.e., the rotation of the output shaft) is transmitted to transmission section 72.

Transmission section 72 transmits the output (rotation) of electric motor 71 to rotation unit 6. As shown in FIG. 7, transmission section 72 includes speed reducer 720, torque limiter 721, and coupling section 722.

Speed reducer 720 reduces the output (rotation) of electric motor 71 and outputs it. The output (rotation) of speed reducer 720 is transmitted to rotation unit 6 via torque limiter 721 and coupling section 722. Speed reducer 720 may be configured by a planetary gear mechanism, for example. However, speed reducer 720 may be various types of speed reducers.

Torque limiter 721 is disposed between speed reducer 720 and coupling section 722 described later. Torque limiter 721 is fixed to the output shaft of speed reducer 720. Torque limiter 721 is disposed on the downstream side of speed reducer 720 and the upstream side of coupling section 722 in a power transmission direction of electric motor 71.

The power of electric motor 71 is transmitted from electric motor 71 to rotation unit 6. Therefore, the upstream side in the power transmission direction of electric motor 71 is the side closer to electric motor 71. On the other hand, the downstream side in the power transmission direction of electric motor 71 is the side closer to rotation unit 6.

Torque limiter 721 prevents transmission of shock torque to electric motor 71 from a member disposed downstream of torque limiter 721 in the power transmission direction of electric motor 71.

Such torque limiter 721 contributes to the suppression of damage and failure of electric motor 71. The aforementioned shock torque is, for example, torque generated due to contact between stopper portion 703 of housing 70 and stopped portion 731c described later.

Coupling section 722 transmits the rotation of speed reducer 720 to rotation shaft 60 of rotation unit 6. Coupling section 722 is disposed between torque limiter 721 (in other words, speed reducer 720) and rotation shaft 60 of rotation unit 6. Coupling section 722 may be various types of couplings.

Position detection device 73 detects information regarding the position (in other words, the phase) of rotation unit 6 in the rotational direction (hereinafter simply referred to as "information regarding the position of rotation unit 6").

Position detection device 73 sends the detected information to controller 25. Controller 25 controls the oscillating operation of rotation unit 6 based on the information obtained from position detection device 73 (that is, the information regarding the position of rotation unit 6).

As shown in FIG. 7, position detection device 73 is disposed around coupling section 722. Position detection device 73 includes first detection device 730 and second detection device 731. Position detection device 73 detects information regarding the position of rotation unit 6 based on the combination of detection values of first detection device 730 and second detection device 731.

First detection device 730 includes first detected portion 730a and first detector 730b.

As shown in FIG. 7, first detected portion 730a is fixed to the first end face of coupling section 722. The first end face of coupling section 722 is the end face of coupling section 722 on one side (in the present embodiment, the rear side) in the axial direction (in other words, the axial direction of rotation shaft 60). The first end face of coupling section 722 is also the end face on the side farthest from rotation unit 6 among the end faces of coupling section 722.

As described above, first detected portion 730a is fixed to rotation shaft 60 via coupling section 722. First detected portion 730a may also be directly fixed to rotation shaft 60.

Additionally, first detected portion 730a may be fixed to a member other than coupling section 722, which rotates together with rotation shaft 60. However, it is preferable that the member to which first detected portion 730a is fixed is disposed downstream of speed reducer 720 in the power transmission direction of electric motor 71.

Although not shown, first detected portion 730a includes, on its outer peripheral surface, a first large diameter portion with a large distance from the center (large outer diameter) and a first small diameter portion with a small distance from the center (small outer diameter).

First detector 730b is, for example, a non-contact type proximity sensor. First detector 730b is disposed to face the outer peripheral surface of first detected portion 730a. First detector 730b is supported by housing 70 (specifically, first housing 700). In other words, first detector 730b is fixed to a non-rotating member.

The distance between first detector 730b and the outer peripheral surface of first detected portion 730a differs between a case where first detector 730b faces the first large diameter portion of first detected portion 730a and a case where it faces the first small diameter portion of first detected portion 730a. The detection value of first detector 730b (also referred to as the first detection value) changes according to such differences in distance.

Second detection device 731 includes second detected portion 731a and second detector 731b.

As shown in FIG. 7, second detected portion 731a is fixed to the second end face of coupling section 722. The second end face of coupling section 722 is the end face of coupling section 722 on the opposite side of the first end face. Specifically, the second end face of coupling section 722 is the end face on the other side (in the present embodiment, the front side) in the axial direction of coupling section 722 (in other words, the axial direction of rotation shaft 60). The second end face of coupling section 722 may be the end face on the side closer to rotation unit 6 among the end faces of coupling section 722.

As described above, second detected portion 731a is fixed to rotation shaft 60 via coupling section 722. Second detected portion 731a may also be directly fixed to rotation shaft 60.

Additionally, second detected portion 731a may be fixed to a member other than coupling section 722, which rotates together with rotation shaft 60. However, it is preferable that the member to which second detected portion 731a is fixed is disposed downstream of speed reducer 720 in the power transmission direction of electric motor 71.

As shown in FIG. 8, second detected portion 731a includes, on its outer peripheral surface, a second large diameter portion with a large distance from the center (large outer diameter) and a second small diameter portion with a small distance from the center (small outer diameter).

In the present embodiment, the phases of the second large diameter portion and the second small diameter portion of second detected portion 731a differ from the phases of the first large diameter portion and the first small diameter portion of first detected portion 730a. In other words, second detected portion 731a and first detected portion 730a are arranged on the same straight line and are offset in the circumferential direction.

Additionally, as shown in FIGS. 7 to 9, second detected portion 731a includes stopped portion 731c. Stopped portion 731c is disposed at a single position in the circumferential direction (i.e., the rotational direction) of second detected portion 731a. As second detected portion 731a rotates together with rotation shaft 60, stopped portion 731c also rotates together with rotation shaft 60.

Stopped portion 731c contacts stopper portion 703 of main body 4 in the circumferential direction (i.e., the rotational direction) when rotation unit 6 is in the first attitude (see FIGS. 8 and 9). When stopped portion 731c and stopper portion 703 are in contact, the rotation of second detected portion 731a in the second rotational direction is restricted by stopper portion 703.

When the rotation of second detected portion 731a in the second rotational direction is restricted, the rotation of rotation unit 6 in the second rotational direction is also restricted. In other words, stopper portion 703 is a member that restricts the rotation of rotation unit 6 in the second rotational direction when rotation unit 6 is in the first attitude. In other words, stopper portion 703 is also a member for positioning rotation unit 6 when it is in the first attitude.

Furthermore, when stopped portion 731c and stopper portion 703 are in contact, second detected portion 731a can rotate in the first rotational direction. In other words, when stopped portion 731c and stopper portion 703 are in contact, rotation unit 6 can rotate in the first rotational direction.

Additionally, the position of the stopped portion is not limited to the position of stopped portion 731c in the present embodiment. The stopped portion may be disposed at an appropriate position on a member that rotates together with rotation unit 6.

Second detector 731b is, for example, a non-contact type proximity sensor. Second detector 731b is disposed to face the outer peripheral surface of second detected portion 731a. Second detector 731b is supported by housing 70 (specifically, first housing 700). In other words, second detector 731b is fixed to a non-rotating member.

The distance between second detector 731b and the outer peripheral surface of second detected portion 731a differs between a case where second detector 731b faces the second large diameter portion of second detected portion 731a and a case where it faces the first small diameter portion of second detected portion 731a. The detection value of second detector 731b (also referred to as the second detection value) changes according to such differences in distance.

In the present embodiment, first detected portion 730a and second detected portion 731a are disposed in a state where their phases are offset. Therefore, even when the phase of rotation shaft 60 is the same, the detection value of first detector 730b (first detection value) and the detection value of second detector 731b (second detection value) differ from each other.

Position detection device 73 detects information regarding the position of rotation unit 6 based on the combination of the detection values of first detection device 730 and second detection device 731. It should be noted that the configuration of position detection device 73 as described above is an example of a position detection device. The position detection device may be a detection device with various configurations.

Below, the operation of drug acceleration device 5 having the configuration as described above will be briefly explained.

Drug acceleration device 5 temporarily blocks drug D in conveyance space 44. Then, drug acceleration device 5 accelerates and discharges blocked drug D. Such operation of drug acceleration device 5 is controlled by controller 25.

Below, with reference to FIGS. 10A to 10D and FIGS. 4 to 9, the operation of drug acceleration device 5 and the effects obtained from drug acceleration device 5 will be explained. It should be noted that the following explanation is about the operation of drug acceleration device 5 in first conveying unit 3a. The operation of drug acceleration device 5 in other conveying units different from first conveying unit 3a is also almost the same.

First, as shown in FIGS. 4 and 5, drug D is supplied from upper section 10 to first conveying unit 3a. Drug D travels from supply port 45 into conveyance space 44. The travel of drug D at this time is based on free fall.

Drug D travels on upstream plate portion 400 of bottom plate portion 40 and arrives at curved portion 401. The region where curved portion 401 is provided is first region 440 in conveyance space 44. Drug acceleration device 5 is disposed in first region 440.

Before drug D arrives at curved portion 401, controller 25 controls driver 7 (specifically, electric motor 71) to set rotation unit 6 of drug acceleration device 5 to the first attitude shown in FIG. 10A.

As previously described, in the first attitude of rotation unit 6, rotation unit 6 closes off conveyance space 44 such that drug D cannot pass through the conveyance space. Therefore, even when drug D travels forcefully to curved portion 401, drug D does not travel downstream of rotation unit 6.

Drug D that arrives at curved portion 401 is temporarily blocked by blocker 61 of rotation unit 6, as shown in FIG. 10A. In other words, drug D is temporarily stored in curved portion 401 by blocker 61 of rotation unit 6. The plurality of drugs D blocked by blocker 61 of rotation unit 6 can be regarded as a group of drugs to be contained in one bag.

After a predetermined time has elapsed since drug D was blocked in curved portion 401, controller 25 rotates rotation unit 6 in the first rotational direction, which is the direction indicated by arrow A₁ in FIG. 10A (in other words, the delivery rotational direction). Specifically, controller 25 rotates electric motor 71 in the first rotational direction.

In the present embodiment, the first rotational direction is the forward direction of electric motor 71. However, depending on the mounting position of electric motor 71, the first rotational direction may become the reverse direction of electric motor 71.

When rotation unit 6 rotates from the first attitude in the first rotational direction, blocker 61 of rotation unit 6 also rotates in the first rotational direction. As a result, as shown in FIG. 10B, the state where drug D is blocked by blocker 61 is released.

In the present embodiment, as shown in FIG. 10B, drug D, in the state where the blocking by blocker 61 is released, remains in curved portion 401. The reason is that the downstream end of curved portion 401 is positioned above a midsection (in other words, the intermediate portion) of curved portion 401. In other words, drug D is prevented from traveling downstream by the downstream end of curved portion 401.

Thus, in the present embodiment, curved portion 401 functions as a retainer that temporarily retains drug D. The shape of curved portion 401 in the present embodiment is a preferred shape for the retainer.

However, the configuration of the retainer is not limited to curved portion 401. The retainer may have any shape that can prevent drug D from traveling by free fall after the blocking by blocker 61 is released.

For example, the retainer may be planar. In this case, it is preferable that the planar retainer is inclined so that it is positioned higher toward the downstream side. However, the planar retainer may be disposed horizontally. Also, the retainer may have a configuration with fine irregularities on its upper surface.

When rotation unit 6 rotates further in the first rotational direction (the direction indicated by arrow A₁ in FIG. 10A) from the state shown in FIG. 10B, as shown in FIG. 10C, deliverer 62 of rotation unit 6 accelerates and delivers drug D, which is retained in curved portion 401, to the downstream side.

At this time, deliverer 62 delivers drug D in the direction along tangent L₄₀₁ (see FIG. 10A) at the downstream end of curved portion 401. In other words, as shown in FIG. 10C, drug D is delivered toward the obliquely upward downstream side.

In the present embodiment, since drug D is retained in curved portion 401, deliverer 62 can reliably accelerate and deliver drug D. Therefore, deliverer 62 can reliably cause drug D to travel. As a result, the time required for the drug packaging operation can be reduced.

Drug D delivered by deliverer 62 collides with the lower surface of top plate portion 43, as shown in FIG. 10C, and is reflected obliquely downward on the downstream side. In the present embodiment, cushioning member 431 is disposed on a portion where drug D collides with top plate portion 43. Therefore, damage to drug D is suppressed.

Drug D delivered by deliverer 62 travels within conveyance space 44. Drug D delivered by deliverer 62 is accelerated by deliverer 62, so it travels at a faster speed than when it were traveling by free fall alone. As a result, the time for drug D to pass through conveyance space 44 is shortened.

Also, controller 25 controls electric motor 71 to stop the rotation of rotation unit 6 when rotation unit 6 is in the second attitude (the state shown in FIG. 10C). Based on the information about the position of rotation unit 6 obtained from position detection device 73, controller 25 detects that rotation unit 6 is in the second attitude.

The second attitude of rotation unit 6 is, for example, the attitude of rotation unit 6 shown in FIG. 10C. However, the second attitude of rotation unit 6 is not limited to the attitude of rotation unit 6 shown in FIG. 10C.

Subsequently, controller 25 controls electric motor 71 to rotate rotation unit 6 in the second rotational direction (the direction indicated by arrow A₂ in FIG. 10C). In other words, controller 25 rotates electric motor 71 in the second rotational direction (in the present embodiment, the reverse direction) when rotation unit 6 is in the second attitude. As a result, rotation unit 6 rotates from the second attitude toward the first attitude.

When rotation unit 6 rotates from the second attitude toward the first attitude, electric motor 71 continues to rotate in the second rotational direction. Then, when rotation unit 6 reaches the first attitude, stopped portion 731c, which rotates together with rotation unit 6, collides with stopper portion 703.

In the present embodiment, controller 25 reduces the current supplied to electric motor 71 and reduces the output of electric motor 71 at a predetermined position on the way from the second attitude to the first attitude of rotation unit 6. The predetermined position may be, for example, the position of line L₁ in FIG. 10A. Alternatively, the predetermined position may be a position closer to the first attitude of rotation unit 6 than line L₁ in FIG. 10A (that is, between line L₁ and line L₂ in FIG. 10A). Such a configuration can reduce the impact when stopped portion 731c collides with stopper portion 703.

When stopped portion 731c collides with stopper portion 703, rotation unit 6 is bounced back by stopper portion 703. In this state, since electric motor 71 continues to rotate in the second rotational direction, rotation unit 6 rotates again in the second rotational direction. Subsequently, stopped portion 731c collides with stopper portion 703 again.

When the momentum of rotation unit 6 is not sufficiently decelerated, rotation unit 6 is bounced back by stopper portion 703. Subsequently, rotation unit 6 rotates in the second rotational direction, and stopped portion 731c collides with stopper portion 703.

When the momentum of rotation unit 6 is sufficiently decelerated, rotation unit 6 stops in the first attitude (see FIG. 10D) without being bounced back by stopper portion 703. In this state, rotation unit 6 is positioned by stopper portion 703. The attitude of rotation unit 6 shown in FIG. 10D is the same as the attitude of rotation unit 6 shown in FIG. 10A.

In the present embodiment, rotation shaft 60 generates a moment in the second rotational direction during a final phase of the stroke when rotation unit 6 pivots from the second attitude to the first attitude.

In other words, rotation shaft 60 generates a moment in the second rotational direction within a predetermined range including the first attitude of rotation unit 6. Furthermore, in other words, rotation shaft 60 generates a moment in the second rotational direction (in other words, the direction toward stopper portion 703) within a predetermined range including the state where stopped portion 731c and stopper portion 703 are in contact with each other.

Therefore, even when stopped portion 731c and stopper portion 703 collide with each other and rotation unit 6 is bounced back by stopper portion 703, a force in the second rotational direction (hereinafter referred to as biasing force) based on the moment generated by rotation shaft 60 acts on rotation unit 6.

Such a biasing force is a force different from the power of electric motor 71. **In** other words, rotation unit 6 receives the biasing force based on the moment generated by rotation shaft 60 along with the force in the second rotational direction received from electric motor 71. Such a biasing force is a force in the opposite direction to the direction in which rotation unit 6 is bounced back by stopper portion 703.

Therefore, even when rotation unit 6 is bounced back by stopper portion 703, the amount by which rotation unit 6 is bounced back by stopper portion 703 can be reduced. As a result, the attitude of rotation unit 6 can settle into the first attitude in a short time. Therefore, the time required for the drug packaging operation can be reduced.

In particular, in the present embodiment, as shown in FIG. 10A, the range (predetermined angle θₐ) in which rotation shaft 60 generates a moment in the second rotational direction is set to 90 degrees or more. Therefore, even when rotation unit 6 is bounced back significantly (for example, 90 degrees) by stopper portion 703, rotation unit 6 can receive the above-mentioned biasing force. As a result, the attitude of rotation unit 6 can settle into the first attitude in a short time.

Also, rotation shaft 60 generates the above-mentioned moment even in the first attitude of rotation unit 6. Therefore, rotation unit 6 receives the biasing force in the second rotational direction in the first attitude. Therefore, stopped portion 731c is pressed against stopper portion 703. As a result, rotation unit 6 is positioned in the first attitude.

Subsequently, as shown in FIGS. 4 and 5, drug D is supplied from upper section 10 to first conveying unit 3a. Then, controller 25 repeatedly controls the operation of above-mentioned drug acceleration device 5.

### (Additional Remarks)

The biasing force acting on rotation unit 6 as described above is a force generated based on the configuration (specifically, the shape) of rotation shaft 60. In other words, the above-mentioned biasing force is a force that arises based on the moment generated by rotation shaft 60 according to its shape.

Such a moment changes in direction and magnitude according to the phase of rotation shaft 60. In other words, such a moment changes in direction and magnitude according to the phase of rotation shaft 60. Specifically, the direction and magnitude of the aforementioned moment differ at the position of rotation shaft 60 shown in FIG. 10A, the position of rotation shaft 60 shown in FIG. 10B, and the position of rotation shaft 60 shown in FIG. 10C.

Therefore, the biasing force acting on rotation unit 6 also changes in direction and magnitude according to the phase of rotation shaft 60 (i.e., rotation unit 6). In other words, the biasing force acting on rotation unit 6 changes in direction and magnitude according to the attitude of rotation unit 6 during the stroke when rotation unit 6 pivots from the second attitude to the first attitude.

One feature of the present invention is that the configuration of rotation unit 6 is devised such that the direction of the biasing force acting on rotation unit 6 in the first attitude becomes the desired direction.

### (Operation and Effect of the Present Embodiment)

As described above, according to drug supply device 1 of the present embodiment, the time required for drug packaging operations can be reduced. The specific reasons are as previously described.

### Industrial Applicability

The disclosure contents of the specification, drawings, and abstract included in the Japanese Patent Application No. 2023-24545 filed on February 20, 2023, are all incorporated herein by reference.

The present invention can be suitably applied not only to drug supply devices placed in pharmacies, etc., but also to drug supply devices placed in various locations.

### Reference Signs List

1 Drug supply device
10 Upper section
11 Shelf
11a Handle
20 Lower section
21 Operation section
22 Dispensing section
23 Hopper
23a Discharge port
23b Shutter
24 Packaging unit
24a Conveying device
24b Printing device
24c Sealing device
25 Controller
3 Drug conveying unit
3a First conveying unit
3b Second conveying unit
3c Third conveying unit
3d Shutter section
4 Main body
40 Bottom plate portion
400 Upstream plate portion
401 Curved portion
402 Downstream plate portion
41 First side plate portion
42 Second side plate portion
43 Top plate portion
430 Top-plate-portion main body
431 Cushioning member
44 Conveyance space
440 First region
45 Supply port
46 Discharge port
5 Drug acceleration device
6 Rotation unit
60 Rotation shaft
60a Intermediate shaft portion
60b D-cut surface
61 Blocker
62 Deliverer
63 Fixing member
63a First plate
63b Second plate
7 Driver
70 Housing
700 First housing
700a Housing-side fixing member
701 Second housing
702 Support member
703 Stopper portion
71 Electric motor
72 Transmission section
720 Speed reducer
721 Torque limiter
722 Coupling section
73 Position detection device
730 First detection device
730a First detected portion
730b First detector
731 Second detection device
731a Second detected portion
731b Second detector
731c Stopped portion
C Tablet case
W1, W2, W3, W4, W5, W6 Passage
D Drug
S Virtual circle

## Claims

1. A drug supply device, comprising:
a conveyor that guides travel of a drug;
a drug accelerator that oscillates by a motor, blocks the drug on the conveyor in a first attitude, and pivots toward a second attitude to accelerate and deliver the drug; and
a stopper portion that makes contact with the drug accelerator in the first attitude of the drug accelerator to position the drug accelerator, wherein
the drug accelerator receives a biasing force in a direction toward the stopper portion together with a driving force of the motor during a final phase of a stroke when the drug accelerator pivots from the second attitude to the first attitude.

2. The drug supply device according to claim 1, wherein:
the drug accelerator includes a stopped portion that makes contact with the stopper portion in the first attitude, and
the stopped portion is pressed against the stopper portion by the biasing force in the first attitude.

3. The drug supply device according to claim 2, wherein:
the drug accelerator includes a shaft member that is rotatable and is a center of oscillation of the drug accelerator,
the stopped portion rotates together with the shaft member, and
the shaft member generates, during the final phase of the stroke in a rotational direction of the shaft member, a moment in a direction toward the stopper portion.

4. The drug supply device according to claim 3, wherein
the shaft member presses the stopped portion against the stopper portion by the moment in the first attitude.

5. The drug supply device according to claim 3, wherein
the shaft member in the first attitude has a center of gravity in a cross-section shifted forward in a traveling direction of the drug as the cross-section approaches a central portion of the shaft member in an axial direction.

6. The drug supply device according to claim 3, wherein
the shaft member is slightly curved.

7. The drug supply device according to claim 6, wherein
the shaft member in the first attitude is curved to be convex forward in a traveling direction of the drug.

8. The drug supply device according to claim 7, wherein:
the shaft member includes, on an outer peripheral surface, a D-cut surface extending in an axial direction of the shaft member, and
the D-cut surface is disposed on a front side in the traveling direction of the drug in the first attitude.

9. The drug supply device according to claim 1, wherein
the drug accelerator includes:
a blocker that blocks the drug, and
a deliverer that delivers the drug.

10. The drug supply device according to claim 9, wherein
the drug accelerator in the first attitude closes off, by the blocker and the deliverer, a space surrounded by the conveyor, such that the space is impassable by the drug.

11. The drug supply device according to claim 1, wherein
a direction and magnitude of the biasing force vary according to an attitude of the drug accelerator in the stroke.
